# EUROPEAN PATENT APPLICATION

(11) **EP 2 018 033 A1**
(43) Date of publication of application: **21.01.2009**
(21) Application number: 08012588.3
(22) Date of filing: 11.07.2008
(51) Int. Cl.: H04M 1/725, H04M 1/02

(54) **System method and device for providing asynchronous event driven reminders**

(30) Priority: 15.07.2007 US 778051
(71) Applicant: Emblaze Mobile Ltd., 43662 Industrial Area Ra'anana (IL)
(72) Inventor: Reifman, Eli, Ra'anana 43662 (IL)
(74) Representative: Bauer, Clemens

(57) **Abstract**

The present invention is a device and method for providing asynchronous event based reminders in the context of a mobile communication/computing device. According to some embodiments of the present invention, integral with a communication/computing device there may be provided a Reminder Logic Module functionally associated with or integral with an Event Register, an Event Receiving Unit, an Event Correlation Unit and an Event Action/Response Triggering Unit. (key words: location based events, GPS, call information events, user interference event, time based event).

## Description

### TECHNICAL FIELD

The present invention relates to the field of computing. More specifically, the present invention relates to a system, method, and device for providing asynchronous event driven reminders.

### BACKGROUND

In recent decades, electronic technology, including communication technology, has revolutionized our everyday lives. Electronic devices such as Personal Digital Assistants ("PDA's"), cell phones, mobile media players and digital cameras have permeated the lives of almost every person living in the developed world - and quite a number of people living in undeveloped countries. Mobile communication and computing devices, especially, have become the means by which countless millions conduct their personal and professional interactions with the world. It has become almost impossible for many people, especially those in the business world, who use these devices as a means to improve productivity, to function without access to their electronic devices. Today's mobile communication devices (e.g. smart cellular phones) go far beyond their original purpose of voice communication. They now support text messaging, Internet access, entertainment packages, photography, shared calendars and reminders, and much more. The probability for even greater functionality is high, driven by three related forces: consumer demand, market competition and mobile infrastructure improvements.

One of the present day features that mobile communication devices provide is time-based reminders for various aspects of the user's personal and professional life, such as a reminder to be ready for an upcoming meeting or to watch a favorite TV show in 15 minutes. Many mobile devices communicate with office calendar/scheduling systems, and users are able to receive reminders and update calendar entries remotely. Users may share or publish their calendars remotely. However, all calendar entries and associated reminders are time based and have no connection to the environment, location or activities of the user.

There is thus a need in the field of mobile communication/computing for a device, method and system for providing reminders based on asynchronous events, such as but not limited to location, received calls, made calls, and others.

### SUMMARY

The present invention is a device method and system for providing asynchronous event based reminders in the context of a mobile communication/computing device. According to some embodiments of the present invention, integral with a communication/computing device there may be provided a Reminder Logic Module functionally associated with or integral with an Event Register, an Event Receiving Unit, an Event Correlation Unit and an Event Action/Response Triggering Unit.

The Event Receiving Unit may receive one or more synchronous and asynchronous event indicators from one or a set of communication/computing - device components or subsystems functionally associated with the Reminder Logic Module. The Event Receiving Unit may receive an event indicator about and from anyone of the following: (1) Time - Clock Circuitry, (2) Location - Location Derivation Block (GPS based location derivation or Network Base-Station ID Based location derivation), (3) Communication Session (Inbound and Outbound) Information - device controller which coordinates communication circuitry of the communication/computing device, and (4) User Initiated Input - user input devices such as (a) keypad, (b) microphone, (c) camera, and (d) biometric reader.

According to some embodiments of the present invention, received event indicators may be correlated by an Event Correlation Unit with event records stored in the Event Register to determine whether the received event requires an Action or Response according to any of the stored event records. An event record may consist of data such as: (1) event type, (2) conditions, (3) pointers to PIM data, and (4) event response/actions to be triggered by the event. Event records may store absolute event data (Triggers, Conditions and Action/Responses), for example, upon receiving a call from a specific phone number or upon the device being at specific coordinates (longitude and latitude), between the hours of 8am and 3pm, pop up reminder to call a specific number. Event records may store relative or meta-data (Triggers, Conditions and Action/Responses), for example, upon receiving a call from John Smith (phone number stored in Personal Information Management database) or upon the device being in Paris (correlate GPS output or local base station ID with database), between the hours of 8am and 3pm, pop up reminder to call Mother and dial Mother's number (phone number stored in Personal Information Management database). An Event Action/Response Triggering Unit may signal the device controller to implement Actions/Responses associated with a received event correlated with an event record in the Event Register.

An aspect of the disclosure relates to a communication device comprising one or more interface devices for firing an event; and a reminder logic module for receiving the event from the device and triggering an action or response. Within the communication device, the event may relate to one or more items selected from the group consisting of: a clock event; a location event; a call information event; a user interface event; and a device operation event. Within the communication device, the interface device optionally is selected from the group consisting of: a location derivation device; a GPS; a Network Base-Station ID Based location derivation; a network communication device; network circuitry; clock circuitry; a keypad; a camera; a speaker; a microphone; a biometric reader; a tactile transducer; a data entry surface and a display. Within the communication device, the reminder logic module optionally comprises: an event register for storing for one or more stored events, each stored event comprising an event trigger and an event action or response; an event receiving unit for receiving the one or more events; an event correlation unit for correlating the events with one or more stored events; and an event action or response triggering unit for activating the action or response associated with the stored event. The communication device can further comprise a personal information management database for storing personal information associated with the communication device or with a user of the communication device. Within the communication device, the stored event is optionally associated with a trigger type, and the event action or response triggering unit is optionally adapted to correlate the event with the trigger type associated with the stored event.

Another aspect of the disclosure relates to a method for triggering an action by a communication device, the method comprising: receiving an event from an interface device or from a device controller; correlating the event with one or more entries stored in an event register or in a personal information management database; and triggering a response or action associated with the entry. The method can further comprise a step of storing the entry in the event register or in the personal information management database. The method can further comprise a step of updating the entry stored in the event register or in the personal information management database. Within the method the event optionally relates to one or more items selected from the group consisting of: a clock event; a location event; an incoming call information event; an outgoing call information event; and a device operation event. Within the method, the interface device is optionally selected from the group consisting of: a communication circuitry of the communication device; a location derivation device; a GPS; a Network Base-Station ID Based location derivation; a network communication device; a clock; a keypad; a camera; a speaker; a microphone; a biometric reader; a tactile transducer; a data entry surface and a display. Within the method, the stored event is optionally associated with a time indication, and the event action or response is triggered after correlating the event with the time indication associated with the stored event. Within the method, the stored entry is optionally associated with a location event related to a predetermined location, and the response or action is issuing a predetermined message when the communication device is at the predetermined location. Within the method, the stored entry is optionally associated with an incoming or outgoing call from or to a predetermined number, and the response or action is optionally issuing a predetermined message when the communication device receives a call or makes a call from or to the predetermined number. Within the method, the stored entry is optionally associated with a recurrence pattern.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a block diagram showing the functional blocks of an exemplary mobile device including a reminder logic module in accordance with some embodiments of the present invention;
Fig. 2 is a block diagram of an exemplary reminder logic module in accordance with some embodiments of the present invention;
Fig. 3A is a data structure diagram showing an exemplary event register in accordance with some embodiments of the present invention;
Fig. 3B is a data structure diagram showing sample data within an exemplary event register in accordance with some embodiments of the present invention; and
Figs. 4A to 4C are exemplary flowcharts including the steps of various methods by which a reminder logic module in accordance with some embodiments of the present invention may function.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMS) electrically programmable read-only memories (EPROMs), electrically erasable and programmable read only memories (EEPROMs), magnetic or optical cards, or any other type of media suitable for storing electronic instructions, and capable of being coupled to a computer system bus.

Specifically, the disclosed mobile device comprises components which can be implemented as collections of computer instructions designed to be executed by a computing platform residing on a mobile communication device such as a mobile phone.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

The present invention includes a device, method, and system for providing asynchronous event-based reminders in the context of a mobile communication or computing device. According to some embodiments of the present invention, integral with a communication/computing device there may be provided a Reminder Logic Module functionally associated with or integral with an Event Register, an Event Receiving Unit, an Event Correlation Unit and an Event Action/Response Triggering Unit.

The Event Receiving Unit may receive one or more synchronous or asynchronous event indicators from one or a set of communication/computing device components or subsystems functionally associated with the Reminder Logic Module. The Event Receiving Unit may receive an event indicator about or from any of the following: (1) Time event - received from a clock circuitry; (2) Location event - received from a Location Derivation Block, such as a Global Positioning System (GPS) based location derivation, Network Base-Station ID Based location derivation, or others; (3) Communication Session - whether inbound or outbound communication - received from a device controller which coordinates communication of the communication/computing device; and (4) User Initiated Input -user input devices such as keypad, microphone, camera, biometric reader, or others. If an appropriate action was defined for any of these events, once the event is received, the action is taken. Such action can be to pop up a reminder, to send an automatic message to an addressee, to call a predetermined number, or the like.

According to some embodiments of the present invention, received event indicators may be correlated by an event correlation unit with event records stored in an event register to determine whether the received event requires an response or another action according to a stored event record. An event record may include of data such as: (1) event type (2) conditions (3) pointers to Personal Information Management (PIM) data, or (4) event response or actions to be triggered by the event. Event records may relate to raw event data, relating for example to triggers, conditions, actions, or responses, such as upon receiving a call from a predetermined phone number or upon the device being at predetermined coordinates between two predetermined times, pop up a reminder to call a specific number. Event records may alternatively store relative or complex triggers, conditions, actions, or responses, for example, upon receiving a call from John Smith, whose number is stored in the PIM database, or upon the device being in Paris, which is deduces by correlating the coordinates (received from a GPS or local base station ID) and a database, between predetermined hours, pop up a reminder to call Mother or automatically dial Mother's number which is also stored in the PIM database. An event action or response triggering unit may signal the device controller to implement an action or response associated with a received event, correlated with an event record stored in the event register.

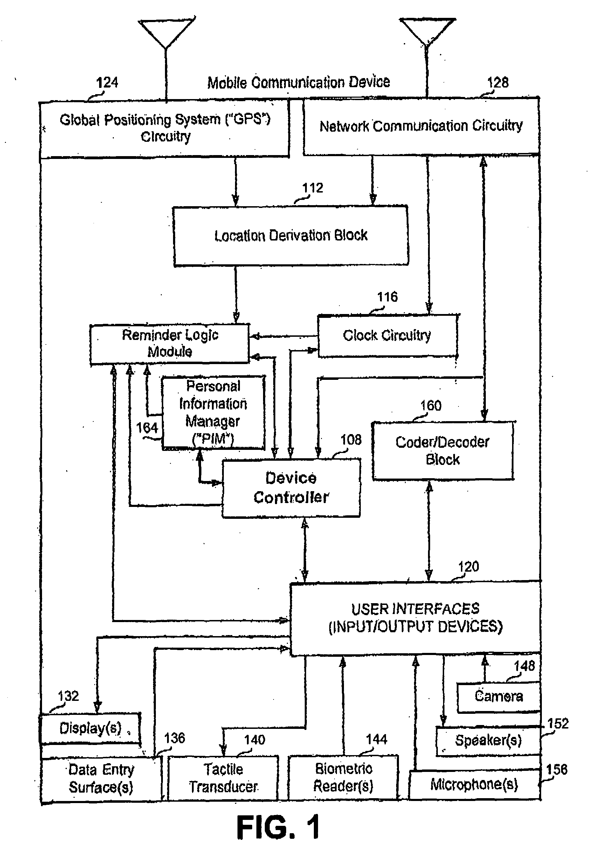

Referring now to Fig. 1, showing a block diagram of the functional blocks of an exemplary mobile device 100. Mobile device 100 comprises a reminder logic module 104, in communication with device controller 108. Reminder logic module 104 receives one or more synchronous or asynchronous event indicators, and issues or triggers associated responses or events. Reminder logic module 104 may receive the event indicators directly from the components which generate the indicators or through device controller 108.

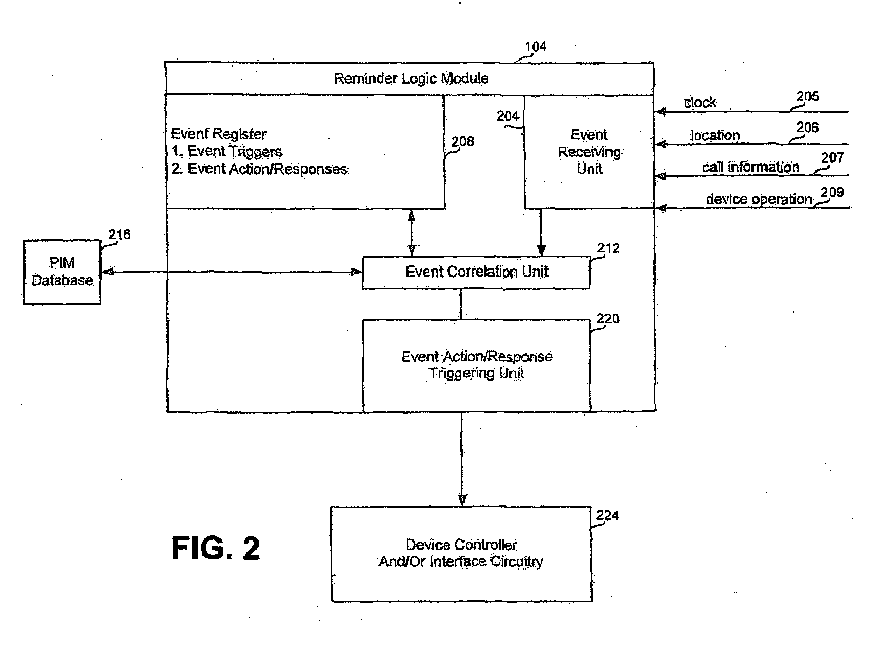

Reminder logic module 104 is further detailed in association with Fig. 2 below. Reminder logic module 104 receives events from fired by one or more interface devices, such as one or a set of communication or computing device components or subsystems, such as location derivation block 112, clock circuitry 116, or any of user interfaces 120. In some embodiments, location derivation block 112 may receive location indication from GPS circuitry 124, or from a network communication circuitry 128 implementing for example through local base station ID. Clock circuitry may also be associated with network communication circuitry 128 in order to receive the local time. User interface devices 120 transfer events initiated by a user. The events may be received from a display device 132; a data entry surface 136; a tactile transducer 140; a biometric reader 144 such as a voice recognition device, a speech recognition device, a fingerprint reader, an iris reader or the like; a camera 148 or another capturing device, a speaker 152, a microphone 156 or the like. User interface devices 120 may communicate with coder/decoder block 160 which encodes or decodes data received from user interface devices 120, from network communication circuitry 128 or from other sources. Reminder logic module 104 is in communication with PIM 164, for storing and retrieving personal information.

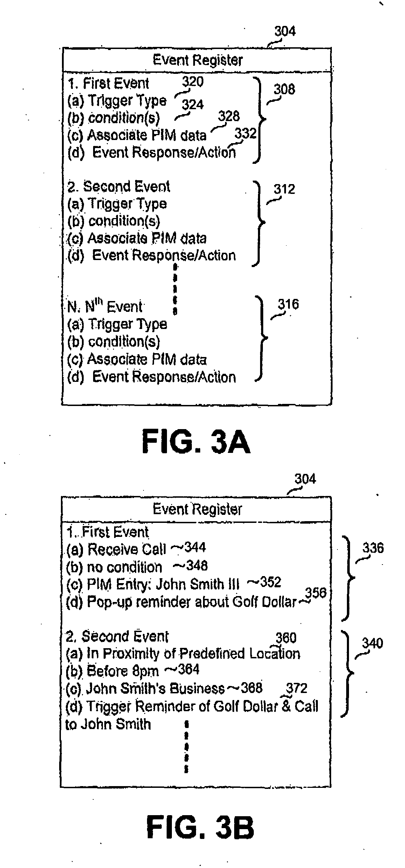

Referring now to Fig. 2, showing a block diagram of an exemplary implementation of reminder logic module 104 of Fig. 1. Reminder logic module 104 comprises an event receiving unit 204 adapted to receive event indicators, for example clock events 205, location events 206, call information events 207, relating to inbound or outbound calls, device operation events 209, or any other event. Reminder logic module 104 further comprises an event register 208 adapted to store event descriptions, comprising an event trigger and an event action or response, as further detailed in association with Fig. 3 below. Reminder logic module 104 further comprises event correlation unit 212 adapted to compare received event indicators with events stored in event register 208. Event correlation unit 212 may also use data stored in a PIM database 216 or other associated repositories, such as a global positioning or base-station ID databases, a dictionary, or others, in determining correlations between received event indicators and one or more entries in event register 208. For example, a PIM database can provide the correlation between location coordinates and location names, between nicknames and phone numbers, between hours and time-of-day indications, or the like. Reminder logic module 104 comprises an event action or response triggering unit 220 for signaling a device controller or interface circuitry 224 to initiate one or more action or response associated with one or more event entries correlating to received event indicators. It will be appreciated that device controller or interface circuitry 224 is logically equivalent to device controller 108, user interfaces 120, clock circuitry 116 and location derivation block 112.

Referring now to Fig. 3A, showing a schematic description the data stored in event register 208. Event register 208 stores one or more event descriptions, such as event 1 description (308), event 3 description (312), and so on until the N-th event description (316). The events can be stored in any format, such as a table, a list, plain text, XML or any proprietary format. Each event can comprise a trigger type 320, for example clock, location, incoming call, outgoing call, or the like; one or more conditions 324, for example time between two predetermined values, location in some predetermined range, incoming call number equal to a predetermined number, or the like; associated PIM data 328, for example a nickname associated with a number, a city associated with location coordinates, or the like; and event or response action 332, such as popup up a message with predetermined text, dial a predetermined number, or the like. It will be appreciated that the event descriptors can be entered via importing from an external source, using an appropriate user interface, by entering text, or any other method.

Referring now to Fig. 3B, showing an event register storing exemplary events, in accordance with the event structure shown on Fig. 3A. Event register 304 stores a first event 336 and a second event 340. First event 336 is of type "receive call" 344, has no conditions 348, the call is received from John Smith III 352, and the action to be initiated 356 is to pop up a message regarding the golf dollar. Second event description 340 comprises a trigger type relating to the proximity of a location 360, a condition of the time being before 8PM 364, the associated PIM data relates to John Smith's business number 368, and action 372 comprises popping up message as before, and initiating a call to said John Smith.

It will be appreciated that a stored event can be further associated with a name or another identifier, such as "Phone call from John". It will be further appreciated that an event can be defined as a one-time event, a constantly effective event, a recurring event, recurring at predetermined pattern or on predetermined dates or times or otherwise. A stored event or an occurrence of a stored event can be associated with a status, such as "done", "irrelevant", "left a message" or others. The status can be updated any time, before, during or after the event was received. The status can be updated automatically, for example after the event was detected, after a predetermined time has passed without the event being detected, or the like. Alternatively, the status can be updated manually by a user. A stored event or an occurrence thereof can also be associated with a comment, which can be for example a free text comment entered by a user.

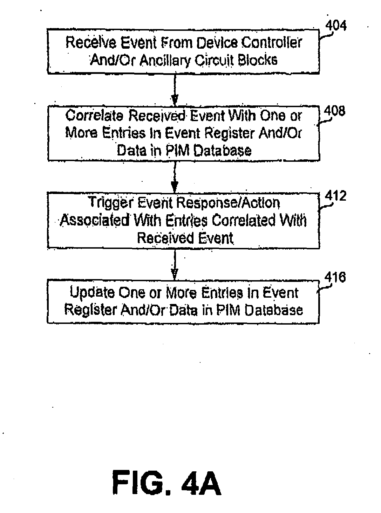

Referring now to Figs. 4A to 4C, showing exemplary flowcharts including the steps of various exemplary methods by which a reminder logic module in accordance with some embodiments of the present invention may function based on different event register entries.

Referring to Fig. 4A showing a general flowchart of a method of the disclosed invention. On step 404, an event is received from the device controller 108 of Fig. 1 or from an ancillary circuit block, such as clock circuit 116, location derivation block 112 or others. On step 408, the received event is correlated or compared with one or more entries in event register 208 of Fig. 2, and optionally with data in PIM database 216. The received event can be compared to all entries in event register 208, is that if multiple events are described complying with the particular event, multiple actions are performed. Alternatively, the comparison is stopped after one event is found to match the received event. On step 412 the response or action associated with the event in event register 208 that matches the event received on step 404 is triggered, and on optional step 416 one or more event entries are updated in event register 208 or PIM database 216.

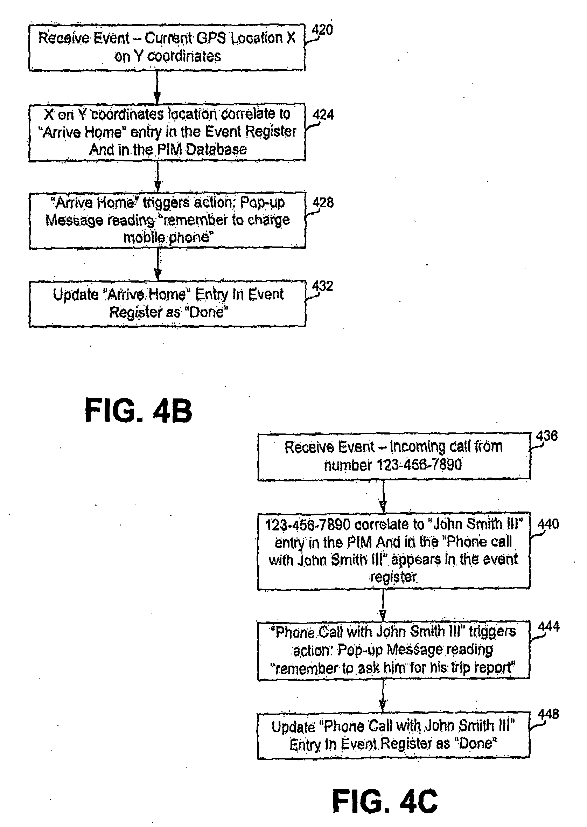

Referring now to Fig. 4B, showing a flowchart of receiving and handling a specific event. On step 420 a location event is received, for example from GPS circuitry 124. The event comprises the coordinates X on Y. On step 424, an event named "arrive home" is found in the event register, which correlates to the location event of X n Y coordinates. On step 428, the "arrive home" triggers an action of popping up a message "remember to charge mobile phone", and on step 432, the "Arrive home" entry in event register 208 is optionally marked as "done".

Referring now to Fig. 4C, showing a flowchart of receiving and handling another specific event.

On step 436, an event is received, for example from device controller 108, associated with a call from a particular number. On step 440, the particular number is found in PIM database 216 as associated with John Smith III, and an event named "phone call with John Smith III" is found in event register 208, wherein the event is associated with an incoming call form John Smith III. On step 444, the event "phone call with John Smith III" triggers an action of popping up a message "remember to ask him for his trip report", and in step 448 the event is marked in event register 208 as "done".

It will be appreciated that the disclosure is not limited to the presented events. Rather, additional events, conditions and actions can be implemented and used without deviating from the guidelines of the disclosure.

It will be appreciated that the disclosed device can be implemented in multiple ways, though different divisions to modules can be designed.

While certain features of the invention have been illustrated and described herein, many modifications, substitutions, changes, and equivalents will now occur to those skilled in the art. It is, therefore, to be understood that the appended claims are intended to cover all such modifications and changes as fall within the scope of the invention.

## Claims

1. A communication device comprising:
at least one interface device for firing an event; and
a reminder logic module for receiving the event from the device and triggering an action or response.

2. The communication device of claim 1 wherein the event relates to an at least one item selected from the group consisting of: a clock event; a location event; a call information event; a user interface event; and a device operation event.

3. The communication device of claim 1 or 2 wherein the interface device is selected from the group consisting of: a location derivation device; a GPS; a Network Base-Station ID Based location derivation; a network communication device; network circuitry; clock circuitry; a keypad; a camera; a speaker; a microphone; a biometric reader; a tactile transducer; a data entry surface and a display.

4. The communication device according to one of the preceding claims wherein the reminder logic module comprises:
an event register for storing for an at least one stored event, the at least one stored event comprising an event trigger and an event action or response;
an event receiving unit for receiving the at least one event;
an event correlation unit for correlating the at least one event with an at least one stored event; and
an event action or response triggering unit for activating the action or response associated with the stored event.

5. The communication device according to one of the preceding claims further comprising a personal information management database for storing personal information associated with the communication device or with a user of the communication device.

6. The communication device of claim 4 wherein the stored event is associated with a trigger type, and wherein the event action or response triggering unit is adapted to correlate the at least one event with the trigger type associated with the stored event.

7. A method for triggering an action by a communication device, the method comprising:
receiving an event from an interface device or from a device controller;
correlating the event with an at least one entry stored in an event register or in a personal information management database; and
triggering a response or action associated with the at least one entry.

8. The method of claim 7 further comprising a step of storing the at least one entry in the event register or in the personal information management database.

9. The method of claim 7 or claim 8 further comprising a step of updating the at least one entry stored in the event register or in the personal information management database.

10. The method according to one of claims 7-9 wherein the event relates to an at least one item selected from the group consisting of: a clock event; a location event; an incoming call information event; an outgoing call information event; and a device operation event.

11. The method according to one of claims 7-10 wherein the interface device is selected from the group consisting of: a communication circuitry of the communication device; a location derivation device; a GPS; a Network Base-Station ID Based location derivation; a network communication device; a clock; a keypad; a camera; a speaker; a microphone; a biometric reader; a tactile transducer; a data entry surface and a display.

12. The method according to one of claims 7-11 wherein the stored event is associated with a time indication, and wherein the event action or response is triggered after correlating the event with the time indication associated with the stored event.

13. The method according to one of claims 7-12 wherein the at least one stored entry is associated with a location event related to a predetermined location, and wherein the response or action is issuing a predetermined message when the communication device is at the predetermined location.

14. The method according to one of claims 7-13 wherein the at least one stored entry is associated with an incoming or outgoing call from or to a predetermined number, and wherein the response or action is issuing a predetermined message when the communication device receives a call or makes a call from or to the predetermined number.

15. The method according to one of claims 7-14 wherein the at least one stored entry is associated with a recurrence pattern.
